# EUROPÄISCHE PATENTANMELDUNG

(11) **EP 1 775 619 A2**
(43) Veröffentlichungstag der Anmeldung: **18.04.2007**
(21) Anmeldenummer: 06022182.7
(22) Anmeldetag: 26.04.2003
(51) Int. Cl.: G02B 23/12, B60R 11/04, B60R 1/00

(54) **Verfahren und Vorrichtung zur Sichtbarmachung der Umgebung eines Fahrzeugs mit abstandsabhängiger Fusion eines Infrarot- und eines Visuell-Abbilds**

(30) Priorität: 18.06.2002 DE 10227171
(62) Teilanmeldung aus: 03759886.9
(71) Anmelder: Bayerische Motorenwerke Aktiengesellschaft, 80809 München (DE)
(72) Erfinder: Hahn, Wolfgang, 85247 Schwabhausen (DE); Weidner, Thomas, 81671 Munchen (DE)

(57) **Zusammenfassung**

Die Erfindung betrifft in erster Linie ein verbessertes Verfahren zur Sichtbarmachung der Umgebung eines Fahrzeugs, insbesondere bei Dunkelheit.

Beim erfindungsgemäßen Nachtsichtsystem (100) ist insbesondere die Bereitstellung eines Visuell-Abbilds bzw. die Bereitstellung von dessen digitalen Daten der Umgebung vorgesehen. Bevorzugt handelt es sich um ein farbiges Visuell-Abbild, das die visuell sichtbaren Objekte der Umgebung zeigt. Darüber hinaus ist die Bereitstellung eines Infrarot-Abbilds bzw. die Bereitstellung von dessen digitalen Daten der Umgebung vorgesehen. Das Infrarot-Abbild zeigt die von den visuell sichtbaren und/oder weiteren Objekten ausgehende Infrarot-Strahlung. Bei einer bevorzugten Ausführungsform wird ein Fusionsbild aus Visuell-Abbild und Infrarot-Abbild des weitgehend gleichen Ausschnitts der Umgebung des Fahrzeugs auf einem Display dargestellt, das mindestens einen fusionierten und mindestens einen nicht bzw. nicht in gleichem Maß bzw. nicht mit gleicher Gewichtung fusionierten Bereich aufweist.

## Beschreibung

Die Erfindung betrifft ein Verfahren und eine Vorrichtung zur Sichtbarmachung der Umgebung eines Fahrzeugs sowie eine Kalibriervorrichtung zur Kalibrierung der Vorrichtung nach dem Oberbegriff des betreffenden unabhängigen Patentanspruchs.

Aus der DE 695 06 174 T2 ist ein Nachsichtsystem für ein Fahrzeug bekannt. Das System weist eine Infrarot-Kamera auf, die ein Infrarot-Abbild erzeugt, das die von Personen und Gegenständen ausgehende Wärmestrahlung eines Ausschnitts der Umgebung des Fahrzeugs zeigt. Das Infrarot-Abbild wird über ein Head-up-Display auf den unteren Teil der Windschutzscheibe projiziert und damit dem Fahrer sichtbar gemacht.

Die Zuordnung von Personen und Objekten im Infrarot-Abbild zu der vor dem Fahrer liegenden, visuell durch die Windschutzscheibe erfassbaren Verkehrssituation ist vom Fahrer zu leisten. Dies ist insbesondere bei Dunkelheit, für die das bekannte System gedacht sein soll, schwierig und oft sogar unmöglich, weil das Infrarot-Abbild Personen und Objekte zeigt, die der Fahrer visuell nicht erkennen kann. Eine exaktere Positionsbestimmung der nur im Infrarot-Abbild erkennbaren Personen und Objekte ist daher regelmäßig nicht möglich und lenkt den Fahrer in gefährlicher Weise ab.

Aus der US-A-6 150 930 ist ein Video-Display-System bekannt. Das System weist eine Infrarot-Beleuchtungsvorrichtung für kurze Wellenlängen und einen Detektor auf, der vier verschiedene Wellenlängen detektieren kann, wie blau, grün, rot und die Infrarot-Strahlung. Ein Infrarot-Bild der Straße und Farbsignale der Straße, die von Bremslichtern, Ampeln etc. herrühren, werden dargestellt.

Die Aufgabe der Erfindung besteht insbesondere in der Bereitstellung eines im Hinblick auf die Umgebungsbedingungen des Fahrzeugs verbesserten Verfahrens und einer verbesserten Vorrichtung zur Sichtbarmachung der Umgebung eines Fahrzeugs.

Die Aufgabe der Erfindung wird durch den entsprechenden, unabhängigen Anspruch verfahrensmäßig bzw. vorrichtungsmäßig gelöst. Vorteilhafte Ausgestaltungen der Erfindung sind in den zugeordneten, abhängigen Patentansprüchen angegeben.

Ein erster wesentlicher Aspekt der Erfindung besteht in der Anzeige bzw. Sichtbarmachung einer Kombination bzw. Überlagerung eines visuellen Abbilds, nachfolgend Visuell-Abbild genannt, und eines Infrarot-Abbilds des weitgehend selben Ausschnitts der Umgebung eines Fahrzeugs. Durch diese Überlagerung oder Fusion der Abbilder unterschiedlicher Spektralbereiche derselben Szene, werden die vorstehend beschriebenen Nachteile des Stands der Technik weitgehend beseitigt.

Um ein weitgehend verzerrungsfreies Fusions-Bild zur Darstellung für den Fahrer zu erhalten, ist gemäß einem zweiten wesentlichen Aspekt der Erfindung vorgesehen, dass der bereit gestellte erste Ausschnitt und der bereit gestellte zweite Ausschnitt ganz oder teilweise durch eine Überlagerungs- bzw. Fusionseinrichtung pixel-und/oder bereichsweise überlagert bzw. fusioniert werden. Zur Bereitstellung des Fusions-Bilds wird der erste Ausschnitt und/oder der zweite Ausschnitt und/oder das Fusions-Bild bzw. deren unmittelbare oder bearbeitete digitale Daten durch mindestens einen Anpassungsparameter angepasst.

Dieser oder diese entfernungsabhängigen Parameter werden bevorzugt bei der Kalibrierung des erfindungsgemäßen Kamera- oder Sensorsystems bzw. Nachtsichtsystems für mindestens zwei Entfernungsbereiche bzw. Abstandsbereiche zwischen den Kameras bzw. Sensoren und einer Kalibriervorrichtung ermittelt. Ein wesentliches Ziel ist es, den oder die Anpassungsparameter so einzustellen, dass das bei der Überlagerung bzw. Fusion der Abbilder entstehende Fusionsbild von Objekten im betreffenden Entfernungsbereich weitgehend verzerrungsfrei ist, wie insbesondere frei von Geister- bzw. Doppelbildern. Bei dem oder den Anpassungsparametern handelt es sich erfindungsgemäß insbesondere um mindestens einen Registrierungs- oder Transformationsparameter. Ein ähnlicher Parameter ist z.B. aus der Registrierung eines digitalen Bildverarbeitungssystems und damit vorgenommenen Überlagerungen von zwei Bildern bekannt. Der oder die fahrsituations- bzw. entfernungsabhängigen Anpassungsparameter werden bevorzugt bei der Kalibrierung in einem Datenspeicher im Fahrzeug gespeichert.

Bei einer bevorzugten Ausführungsform der Erfindung entspricht ein erster Entfernungsbereich einer für eine Stadtfahrt typischen Fahrsituation, wie insbesondere ein Entfernungsbereich von ca. 15 bis 75 m.

Alternativ oder ergänzend entspricht ein zweiter Entfernungsbereich einer für eine Landstrassenfahrt typischen Fahrsituation, wie insbesondere ein Entfernungsbereich von ca. 30 bis 150 m.

Alternativ oder ergänzend entspricht ein dritter Entfernungsbereich einer für eine Autobahnfahrt typischen Fahrsituation, wie insbesondere ein Entfernungsbereich von ca. 50 bis 250 m.

Es versteht sich, dass alternativ oder ergänzend zu den vorgenannten entfernungsabhängigen oder entfernungsbereichsabhängigen Anpassungsparametern auch andere fahrsituationsabhängige Anpassungsparameter insbesondere mit dem vorgenannten Ziel ermittelt werden können. Hierbei kann es sich beispielsweise um geeignete Anpassungsparameter für Fahrten bei tief stehender Sonne, im Nebel, bei einsetzender Dunkelheit oder bei Dunkelheit handeln.

Ein dritter wesentlicher Aspekt der Erfindung besteht darin, die aktuelle Fahrsituation des Fahrzeugs automatisch zu ermitteln und den oder die der aktuellen Fahrsituation entsprechenden, insbesondere durch Kalibrierung gewonnenen und im Fahrzeug gespeicherten Anpassungsparameter zur Verwendung durch die erfindungsgemäße Ausricht-Vorrichtung oder durch die Überlagerungs- bzw. Fusionseinrichtung bereitzustellen. Die Überlagerungs- bzw. Fusionseinrichtung führt eine pixel-und/oder bereichsweise Überlagerung bzw. Fusionierung des in Form von digitalen Daten vorliegenden Visuell-Abbilds und des Infrarot-Abbilds durch, wobei ein oder mehrere entfernungsabhängige Anpassungsparameter das Infrarot-Abbild und/oder das Visuell-Abbild und/oder das Fusions-Bild derart beeinflussen, dass bevorzugt ein weitgehend verzerrungsfreies und/oder geisterbildfreies Fusions-Abbild der Umgebung für den Fahrer bereitgestellt wird.

Alternativ oder ergänzend zur vorgenannten automatischen Ermittlung, ist bei einem Ausführungsbeispiel der Erfindung vorgesehen, dass der Fahrer ihm geeignet erscheinende, insbesondere durch Kalibrierung gewonnene und im Fahrzeug gespeicherte Anpassungsparameter zur Verwendung durch die erfindungsgemäße Ausricht-Vorrichtung oder durch die Überlagerungs- bzw. Fusionseinrichtung auswählt. So können dem Fahrer beispielsweise der oder die Anpassungsparameter für eine Stadtfahrt typische, eine Landstrassenfahrt typische, eine Autobahnfahrt typische Fahrsituation und/oder ggf. für weitere Fahrsituationen zur Auswahl angeboten werden, z.B. in Form einer manuellen Auswahlmöglichkeit oder durch Spracheingabe. Hierdurch wird der Fahrer auch ohne im Fahrzeug befindliches Fahrzeug-Navigationssystem in die Lage versetzt, ein weitgehend verzerrungsfreies bzw. doppelbildfreies Fusions-Bild für die jeweilige Fahrsituation selbst herbeizuführen. Zudem wird dem Fahrer dadurch die Möglichkeit eröffnet, sich ggf. über eine automatische Auswahl hinwegzusetzen. Ebenso kann dem Fahrer die Möglichkeit gegeben werden, einen oder mehrere Anpassungsparameter auszuwählen, die ihm die nähere Umgebung seines Fahrzeugs verzerrungsfrei im Fusions-Bild darstellen, z.B. Entfernungen bis zu 20 m von seinem Fahrzeug. Diese Auswahl kann vom Fahrer beispielsweise dann vorgenommen werden, wenn er im Dunkeln an seine Garage heranfährt und über die Infrarot-Information im Fusions-Bild in Erfahrung bringen will, ob ihm hinter einem Gebüsch aufgelauert wird.

Bei einem bevorzugten Ausführungsbeispiel der Erfindung, wird die aktuelle Position des Fahrzeugs von einem Fahrzeug-Navigationssystem, insbesondere ein Satelliten-Navigationssystem, bestimmt. Anhand der Position wird von dem im Fahrzeug befindlichen Navigationssystem durch Vergleich mit digitalen Kartendaten automatisch die entsprechende Straßenkategorie bzw. Fahrsituation, wie insbesondere Stadtstrasse, Landstrasse oder Autobahn, ermittelt. Solche Fahrzeug-Navigationssysteme sind bereits heute in zahlreichen Fahrzeugen zum Zweck der Routenführung etc. vorhanden und können ohne großen Aufwand zur vorgenanten automatischen, fahrsituationsabhängigen Optimierung der fusionierten Abbilder der Umgebung des Fahrzeugs genutzt werden.

Alternativ oder ergänzend ist bei einem weiteren Ausführungsbeispiel der Erfindung vorgesehen, dass die Fahrsituation anhand mindestens einer fahrdynamischen Größe, wie insbesondere die Fahrzeug-Geschwindigkeit und/oder der Betrieb des Abblend- bzw. Fernlichts und/oder die Fahrzeug-Beschleunigung und/oder Helligkeit und/oder Nebel, ermittelt wird. Diese Informationen können bereits in heutigen Fahrzeugen ganz oder teilweise von deren Bordnetz zur Verfügung gestellt werden, ohne dass ein größerer Aufwand erforderlich ist.

Bei einer bevorzugten Ausführungsform der Erfindung wird ein farbiges visuelles Abbild mit dem Infrarot-Abbild fusioniert bzw. kombiniert oder überlagert. Im Unterschied zu einem schwarzweißen Visuell-Abbild, entsteht ein fusioniertes Bild, das Farbinformationen des Visuell-Abbilds enthält, wie rote Bremsleuchten eines vorausfahrenden Fahrzeugs, eine rote Ampel, ein farbiges Verkehrsschild oder dgl. Die Farbinformation im fusionierten Bild erleichtert dem Fahrer eines entsprechend ausgestatteten Fahrzeugs die schnelle Orientierung und Erfassung der im fusionierten Bild dargestellten Verkehrssituation. Die Farbinformation verringert zudem die Gefahr, dass farbige Warnhinweise (rote Ampel etc.) übersehen werden.

Zusammengefasst werden die Abbilder der Umgebung bzw. Szene für unterschiedliche Spektralbereiche jeweils von Störeinflüssen, wie Verzerrungen des Infrarot- bzw. Visuell-Abbilds, insbesondere aufgrund von Abbildungsfehlern der jeweils verwendeten Optik usw., befreit. Dies geschieht bevorzugt softwaremäßig durch bekannte Maßnahmen zur Aufbereitung von digitalisierten Bildern. Die von Störeinflüssen weitgehend befreiten Abbilder bzw. deren digitale Bild-Daten werden bevorzugt durch digitale Bildverarbeitung zueinander ausgerichtet bzw. zur Deckung gebracht, so dass weitgehend zeit- und ortsgleiche Bild-Paare aus Infrarot- und Visuell-Abbild bzw. von deren digitalen Daten vorliegen. Dies geschieht erfindungsgemäß unter Verwendung von mindestens einem entfernungsabhängigen und/oder fahrsituationsabhängigen Anpassungsparameter zur Herbeiführung eines verzerrungsfreien Fusions-Bildes. Die verwendete Software und Hardware zur digitalen Bildverarbeitung erlaubt vorzugsweise eine Verschiebung, Drehung und Skalierung der Abbilder relativ zueinander. Durch diese Aufbereitung kann der nachfolgende Hardwareaufwand zur Überlagerung bzw. Fusion der Abbilder aus den unterschiedlichen Spektralbereichen in kostengünstiger Weise - trotz weitgehender Echtzeit-Verarbeitung zeit- und ortsgleicher Bild-Paare - minimiert werden.

Gemäß einer bevorzugten Ausführungsform der Erfindung, werden die Infrarot-Abbilder und die Visuell-Abbilder mit jeweils gleicher Bildwiederholrate, bevorzugt von ein oder zwei Kameras oder Sensoren für diese Spektralbereiche, erzeugt. Hierdurch können in besonders einfacher Weise zeitgleiche Bild-Paare aus Infrarot-Abbild und Visuell-Abbild erzeugt werden, was den Software- und Hardware-Aufwand für die nachfolgende, erfindungsgemäße Überlagerung bzw. Fusion beider Abbilder - weitgehend in Echtzeit - erheblich vermindert. Die Verarbeitungsgeschwindigkeit der Bild-Paare steigt; die Kosten für Halbleiter-Speicher zur Zwischenspeicherung der Abbilder werden minimiert.

Bei einer bevorzugten Ausführungsform der Erfindung, zeigt das Infrarot-Abbild die von Personen und Objekten abgegebene Infrarot-Strahlung bzw. Wärmestrahlung, die im Wellenlängenbereich von ca. 8 bis 14 µm liegt. Bevorzugt wird eine IR-Kamera oder ein IR-Sensor verwendet, die oder der im Bereich von ca. 8 bis 10 µm empfindlich ist. Damit kann in vorteilhafter Weise auf einen Infrarot-Strahler bzw. eine solche Beleuchtung (typischer Wellenlängenbereich von ca. 800 nm bis 2,5 µm) für die Fahrzeugumgebung verzichtet werden. Eine wechselseitige Blendung entgegenkommender Fahrzeuge, die in bekannter Weise jeweils mit einer Infrarot-Beleuchtung versehen sind, tritt nicht auf. Ebenso ist das erfindungsgemäße Infrarot-Abbild nicht auf die Reichweite einer Infrarot-Beleuchtung beschränkt.

Alternativ oder ergänzend ist gemäß einem vierten wesentlichen Aspekt der Erfindung vorgesehen, dass das erfindungsgemäße Verfahren bzw. die erfindungsgemäße Vorrichtung die Darstellung eines Fusions-Abbilds aus Visuell-Abbild und Infrarot-Abbild des weitgehend gleichen Ausschnitts der Umgebung eines Fahrzeugs auf einem Display ermöglicht, das mindestens einen fusionierten und mindestens einen nicht bzw. nicht in gleichem Maß bzw. nicht mit gleicher Gewichtung fusionierten Bereich aufweist.

Diesem erfindungsgemäßen vierten Aspekt liegen insbesondere folgende Überlegungen und Maßnahmen zu Grunde. Die vor einem Fahrzeug befindliche Umgebung weist in der Regel zahlreiche Objekte auf, wobei die Objekte üblicherweise unterschiedliche Abstände zum Fahrzeug haben.

Beispielhaft wird nun die folgende Fahrsituation betrachtet. Ein im Nahbereich von 10 bis 25 m auf einer Landstrasse vorausfahrendes Fahrzeug hat einen geringeren Abstand zu den Kameras eines erfindungsgemäß ausgestatteten Folgefahrzeugs als ein im Dunkeln liegender Bereich des rechten Seitenstreifens auf dem sich - visuell nicht sichtbar - weiter vorne Fußgänger befinden. Wie bereits erläutert, werden die für die Landstrassenfahrt (typischer Entfernungsbereich ca. 30 bis 150 m) an sich geeigneten Anpassungsparameter zur Vermeidung von Geister- bzw. Doppelbildern beim erfindungsgemäßen Verfahren bzw. von der erfindungsgemäßen Vorrichtung verwendet. Ohne weitere Beeinflussung der bereits beschriebenen Fusion des Visuell-Abbilds und des Infrarot-Abbilds entsteht ein auf dem Display dargestelltes Fusionsbild, dessen Zentrum bzw. Bildmitte sowohl das Visuell-Abbild des vorausfahrenden Fahrzeugs als auch ein davon räumlich zumindest teilweise getrenntes Infrarot-Abbild des vorausfahrenden Fahrzeugs zeigt, d.h. ein den Fahrer irritierendes Geister- bzw. Doppelbild des Visuell-Abbilds. Die im Bereich von ca. 30 bis 150 m befindlichen Objekte (z.B. die Fußgänger) werden demgegenüber weitgehend verzerrungs- bzw. geisterbildfrei auf dem Display dargestellt.

Erfindungsgemäß werden solche Bereiche des Fusionsbilds nicht oder nur abgeschwächt aus dem Visuell-Abbild und dem Infrarot-Abbild gebildet bzw. fusioniert, die Objekte darstellen, die außerhalb desjenigen Entfernungsbereichs liegen, für den die aktuell verwendeten Anpassungsparameter geeignet sind. Im Ergebnis entsteht dann im vorgenannten Fall auf dem Display insbesondere ein Fusionsbild, das im Zentrum bzw. in der Bildmitte das Visuell-Abbild oder das Infrarot-Abbild des vorausfahrenden Fahrzeugs (nun ohne Doppelbild) und darum herum das Fusionsbild der im Bereich von 30 bis 150 m liegenden Objekte, wie z.B. die Fußgänger, geisterbildfrei zeigt.

Bei einer ersten Ausgestaltung der Erfindung gemäß dem vierten Aspekt ist vorgesehen, den Abstand des vorausfahrenden Objekts zu messen, z.B. durch Radar, Lidar (Light Detection and Ranging) oder Ultraschall. Gemäß einer ersten Variante wird überprüft, ob der ermittelte Abstand in den Abstandsbereich der aktuell verwendeten Anpassungsparameter (z.B. für eine Landstrassenfahrt) fällt. Falls ja, ist keine Verzerrung zu erwarten, d.h. die Fusion kann in der beschriebenen Weise vorgenommen werden. Falls nein, wird das Objekt bzw. der betreffende Entfernungsbereich bei einer ersten Variante in Form seines Visuell-Abbilds oder seines Infrarot-Abbilds auf dem Display dargestellt. Falls nein, wird das Objekt bzw. der betreffende Entfernungsbereich bei einer zweiten Variante durch ein Teil-Fusionsbild auf dem Display dargestellt, wobei das Teil-Fusionsbild aus Visuell-Abbild und Infrarot-Abbild des Objekts unter Verwendung erster Anpassungsparameter und das restliche Fusionsbild oder ein Teil hiervon unter Verwendung zweiter Anpassungsparameter gebildet wird. Der oder die ersten Anpassungsparameter sind im genannten Beispiel für den Abstand des vorausfahrenden Fahrzeugs (ca. 10 bis 25 m) und der oder die zweiten Anpassungsparameter sind für eine Landstrassenfahrt (ca. 30 bis 150 m) geeignet, d.h. im Ergebnis entsteht wiederum ein verzerrungsfreies Fusionsbild (ohne nicht durch Fusion gebildete Bereiche) auf dem Display.

Es versteht sich, dass die Veränderung der verwendeten Anpassungsparameter von einem Teil-Fusionsbild zu einem anderen Teil-Fusionsbild des gesamten auf dem Display dargestellten Fusionsbilds nicht notwendigerweise abrupt erfolgen muss; vielmehr kann es zweckmäßig sein, die Veränderung fließend vorzunehmen, um ein weitgehend verzerrungsfreies Fusionsbild der Objekte aus unterschiedlichen Entfernungsbereichen (Umgebung des Fahrzeugs) zu erhalten.

An der Verwendung von Radar, Lidar oder Ultraschall zur Ermittlung des Abstands ist vorteilhaft, das entsprechende Sende- und Empfangseinrichtungen bereits für ACC (Automatic Cruise Control durch Radar oder Lidar) bzw. für das Einparken (Ultraschall) in modernen Fahrzeugen zur Verfügung stehen.

Es versteht sich, dass alternativ oder ergänzend durch Maßnahmen der digitalen Bildverarbeitung erreicht werden kann, dass der oder die Anpassungsparameter bei der Fusion aus Visuell-Abbild und Infrarot-Abbild zur Bereitstellung eines verzerrungsfreien Abbilds der Umgebung des Fahrzeugs (mit Objekten in unterschiedlichen Entfernungsbereichen) auf dem Display oder dgl. in geeigneter Weise variiert werden.

An der Verwendung der o.g. Sende- und Empfangseinrichtungen zur Ermittlung des Abstands, insbesondere eines vorausfahrenden Fahrzeugs, dürfte demgegenüber von Vorteil sein, dass der Rechen- und damit der Hardware-Aufwand für die digitale Bildverarbeitung beim erfindungsgemäßen Verfahren bzw. bei der erfindungsgemäßen Vorrichtung in kostengünstiger Weise reduziert werden kann.

Die Erfindung wird nachfolgend anhand eines Ausführungsbeispiels näher erläutert. Es zeigt:

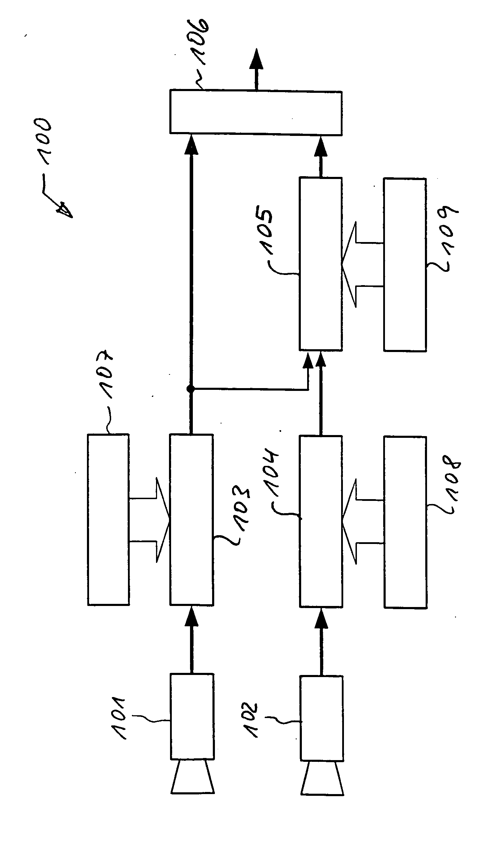

Fig. 1 das Blockschaltbild einer erfindungsgemäßen Vorrichtung zur Sichtbarmachung eines Ausschnitts der Umgebung eines Fahrzeugs bzw. ein Nachtsichtsystem, anhand dem das erfindungsgemäße Verfahren zur Sichtbarmachung beschrieben wird.

Die in Fig. 1 als Blockschaltbild dargestellte, erfindungsgemäße Vorrichtung bzw. das Nachtsichtsystem 100 weist eine im visuellen Spektralbereich aufnehmende elektronische, hier sogenannte Visuell-Kamera 101, z. B. ein CCD-Sensor, eine im infraroten Spektralbereich von ca. 8 bis 10 µm empfindliche elektronische Infrarot-Kamera 102, z. B. ein IR-Sensor, eine erste Normalisierungsvorrichtung 103, eine zweite Normalisierungsvorrichtung 104, eine Ausricht-Vorrichtung 105 und eine Überlagerungs- bzw. Fusionseinrichtung 106 auf. Die Visuell-Kamera 101 liefert ein farbiges, visuelles Abbild.

Die optischen Achsen der Kameras 101 und 102 sind bevorzugt parallel zueinander ausgerichtet, wodurch der Parallaxenfehler minimiert werden kann, und liegen bevorzugt nahe beieinander, wodurch Versetzungsfehler minimiert werden. Die Bildebenen beider Kameras oder Sensoren werden bevorzugt parallel zueinander und senkrecht zur optischen Achse ausgerichtet und liegen nahe beieinander. Die fotoempfindlichen Sensorflächen beider Kameras bzw. Sensoren sind bevorzugt relativ zueinander weder verdreht noch gekippt, sondern weitgehend parallel zueinander angeordnet. Beide Kameras oder Sensoren haben bevorzugt zudem denselben Öffnungswinkel. Durch diese Maßnahmen kann erreicht werden, das die Kameras oder Sensoren Abbilder unterschiedlicher Spektralbereiche liefern, die weitgehend denselben Ausschnitt der Umgebung zeigen und relativ zueinander und zur tatsächlichen Situation nicht verdreht sind. Hierdurch kann der Aufwand für eine Bearbeitung der Abbilder zur Bereitstellung eines fusionierten Bilds aus beiden Abbildern und damit der Hardware- und Software-Aufwand deutlich verringert werden.

Die optischen Oberflächen der Kameras werden bevorzugt hydrophob beschichtet und bevorzugt ist zu ihrer Reinigung eine Hochdruckdüse oder dgl. vorgesehen, wie sie bereits zur Scheinwerfer-Reinigung üblich ist. Beide Kameras werden bevorzugt in einem gemeinsamen Gehäuse eingebaut (Montagefreundlichkeit, Gesamtausrichtung zur Fahrzeugachse, keine Verschiebung optischer Parameter der Kameras untereinander). Am Gehäuse der Kameras sind bevorzugt Befestigungen angeordnet, die einen vibrationsarmen Betrieb der Kameras am oder im Fahrzeug gewährleisten. Für den Betrieb der Kameras sind Anschlüsse für die Betriebsspannung vorgesehen. Die Betriebsspannung der Kameras sollte flexibel an die jeweilige Bordnetzspannung, wie z. B. 12 Volt und/oder 42 Volt, anpassbar sein. Um die Elektronik und die Sensoren der Kameras vor Beschädigungen zu schützen, ist im Betriebsspannungszweig bevorzugt eine Überlastsicherung und ein Verpolungsschutz eingebracht. Die Ausgabe der von den Kameras oder Sensoren generierten Videosignale (Spektralbereiche getrennt oder bereits fusioniert) sollte sich an einem Standard orientieren (z. B. NTSC, PAL, SECAM oder eigener Standard). Als Digital/Analogumsetzer können vorhandene Halbleiterelemente verwendet werden. Die Kameras oder Sensoren können zur Sichtbarmachung der Fahrumgebung vor, hinter und seitlich vom Fahrzeug angebracht werden.

Im Folgenden wird die Kalibrierung des Nachsichtsystems bzw. der Vorrichtung 100 näher beschrieben. Zur Kalibrierung wird eine erfindungsgemäße Kalibriervorrichtung (nicht dargestellt) verwendet. Diese weist mehrere Glühlampen auf, die bevorzugt schachbrettartig angeordnet sind. Glühlampen zeichnen sich dadurch aus, dass sie sowohl Wärmestrahlung als auch visuell sichtbare Strahlung abgeben. Bevorzugt wird eine mit mehreren Glühlampen versehene Platte oder dgl. nacheinander in verschiedenen Abstandsbereichen vor den beiden Kameras bzw. Sensoren 101 und 102 angeordnet. Bei den Abstandsbereichen handelt es sich um typische fahrsituationsabhängige Abstandsbereiche, was nachfolgend näher erläutert werden wird.

Die vor den Kameras 101 und 102 befindliche Kalibriervorrichtung, die bevorzugt in dunkler Umgebung und nicht in der Nachbarschaft von Wärmequellen angeordnet ist, erzeugt in der Visuell-Kamera 101 ein (sogenanntes) Visuell-Abbild, das die schachbrettartig angeordneten Glühlampen zeigt, wie sie auch das menschliche Auge sieht. Ferner erzeugt die Kalibriervorrichtung in der Infrarot-Kamera 102 ein Wärmebild, das ebenfalls die Anordnung der Glühlampen zeigt. Typischerweise zeigt sowohl das Visuell-Abbild als auch das Infrarot-Abbild, insbesondere aufgrund von optischen Abbildungsfehlern etc., Verzeichnungen an den Rändern des jeweiligen Abbilds. In bekannter Weise werden die Verzeichnungen bzw. Abbildungsfehler im Visuell-Abbild durch eine erste Normalisierungsvorrichtung 103 weitgehend beseitigt. In bekannter Weise werden die Verzeichnungen bzw. Abbildungsfehler im Infrarot-Abbild durch eine zweite Normalisierungsvorrichtung 104 weitgehend beseitigt. Die Normalisierung bzw. Fehlerbeseitigung erfolgt bevorzugt durch bekannte, softwaremäßige Maßnahmen an den digitalen Daten der Abbilder (digitale Bildverarbeitung) unter Verwendung von Kalibrierungsparametern 107 für das Visuell-Abbild und Kalibrierungsparametern 108 für das Infrarot-Abbild.

Die normalisierten bzw. weitgehend von Störungen etc. befreiten Abbilder bzw. deren digitale Daten werden durch einen an sich in der digitalen Bildverarbeitung bekannten Registrierungsvorgang zueinander durch eine Ausricht-Vorrichtung 105 unter Verwendung von Registrierungsparametern 109 ausgerichtet. Bei dem Ausrichtvorgang bleibt bevorzugt eines der Abbilder unverändert und dient als Referenz für das andere Abbild. Das zweite Abbild wird in Größe und Lage so verändert, dass ein weitgehend objektgleiches Abbild relativ zum ersten Abbild entsteht.

Die normalisierten Abbilder werden also so relativ zueinander ausgerichtet, dass ein und das selbe Objekt an weitgehend gleicher Stelle und in weitgehend gleicher Größe im fusionierten Bild erscheint. Wird dieser Vorverarbeitungsschritt nicht ausgeführt, entstehen aufgrund unterschiedlicher Kamerageometrien und des Kameraversatzes Geister-, Doppel-, Schatten- bzw. Zwillingsbilder. Das bedeutet, dass ein Objekt an zwei Orten und in unterschiedlichen Größen im fusionierten Bild erscheint. Der Betrachter wird von solch einem Bild eher irritiert, als dass ihm geholfen wird.

Zur fahrsituationsabhängigen Optimierung der pixelgenauen oder bereichsgenauen Fusion, wird zunächst ein erster Registrierungsvorgang für eine stadtfahrt-typische Fahrsituation durchgeführt. Der Abstand zwischen der Kalibriervorrichtung und den Kameras 101 und 102 wird hierzu beispielsweise im Bereich von ca. 15 bis 75 m variiert und der oder die für diesen Abstandsbereich geeigneten Registrierungsparameter werden ermittelt und gespeichert. In entsprechender Weise wird ein zweiter Registrierungsvorgang für eine landstrassen-typische Fahrsituation, d.h. beispielsweise ein Bereich von ca. 30 bis 150 m, durchgeführt. Schließlich wird in entsprechender Weise ein dritter Registrierungsvorgang für eine autobahn-typische Fahrsituation, d.h. beispielsweise im Bereich von ca. 50 bis 250 m, durchgeführt.

Unter Verwendung der von einem Fahrzeug-Navigationssystem (nicht dargestellt) bereitgestellten, aktuellen Positionsdaten wird von dem System anhand von digitalen Kartendaten die der Position des Fahrzeugs entsprechende Straßenkategorie bzw. Fahrsituation ermittelt, wie insbesondere Stadtstrasse, Landstrasse oder Autobahn. Insbesondere bei Dunkelheit, werden die der Fahrsituation entsprechenden und im Fahrzeug bei den Kalibriervorgängen gespeicherten Registrierungs- bzw. Anpassungsparameter von der Überlagerungs- bzw. Ausrichtvorrichtung 105 zur fahrsituationsgerechten Ausrichtung der Abbilder verwendet. So werden insbesondere Doppel-, Schatten- oder Zwillings- bzw. Geisterbilder im fusionierten Bild für die betreffende Fahrsituation weitgehend vermieden.

Alternativ oder ergänzend wird die aktuelle Fahrsituation des Fahrzeugs anhand mindestens einer fahrdynamischen Größe ermittelt. Die der oder den fahrdynamischen Größen zugeordneten und im Fahrzeug gespeicherten Registrierungs- bzw. Anpassungsparametern werden erfindungsgemäß von der Überlagerungs- bzw. Ausrichtvorrichtung 105 zur fahrsituationsgerechten Ausrichtung der Abbilder verwendet. Auch durch diese Maßnahme werden insbesondere Schatten- oder Zwillings- bzw. Geisterbilder im fusionierten Bild für die betreffende Fahrsituation weitgehend vermieden. Bei den fahrdynamischen Größen des Fahrzeugs handelt es sich insbesondere um dessen Geschwindigkeit, die Einschaltung des Abblend- oder Fernlichts oder um dessen positive oder negative Beschleunigung.

Die oben genannte Ausrichtung der normalisierten Abbilder kann in drei Schritte eingeteilt werden: Verschiebung, Drehung und Skalierung. In der Praxis stellte sich heraus, das die Reihenfolge Drehung, Skalierung und Verschiebung die qualitativ besten Resultate lieferte. Da die Reihenfolge dieser Schritte im Allgemeinen nicht kommutativ bzw. vertauschbar ist, sollte darauf geachtet werden, dass die Reihenfolge dieser Schritte bei der Kalibrierung und bei dem nachfolgenden Betrieb des erfindungsgemäßen Nachtsichtsystems dieselbe ist. Ggf. ist die Kalibrier- und/oder Betriebs-Software des Nachtsichtsystems entsprechend zu gestalten.

Die zueinander ausgerichteten Abbilder werden in einer Überlagerungs- bzw. Fusionseinrichtung 106 softwaremäßig durch die Bearbeitung von deren digitalen Daten überlagert bzw. fusioniert. Aus jedem zeit- und ortsgleichen bzw. objektgleichen Bild-Paar aus Visuell-Abbild und Infrarot-Abbild wird ein fusioniertes oder überlagertes Bild generiert, das dem Fahrer des Fahrzeugs bevorzugt auf einem Farb-Monitor im Fahrzeug (oder einem sonstigen Display) dargestellt wird.

Bevorzugt erfolgt eine Fusion der zeit- und ortsgleichen Bildpaare aus Visuell-Abbild und Infrarot-Abbild auf der Basis einzelner, einander zugeordneter Pixel-Paare aus beiden Abbildern oder unter Verwendung von mehreren Pixeln aus den beiden Abbildern. Dies kann sich insbesondere daran orientieren, welche Auflösung gewünscht und/oder welche Rechenleistung für die digitale Bildverarbeitung zur Verfügung steht. Die wie beschrieben vorverarbeiteten Abbilder werden durch digitale Verarbeitung von deren Bild-Daten überlagert und angezeigt. Vom Ergebnis her, kann dieser Vorgang annähernd mit dem Übereinanderlegen von Folien oder Dias derselben Szene oder Fahrumgebung verglichen werden. Rechentechnisch bzw. bei der digitalen Bildverarbeitung wird dies durch Mittelwertbildung der Pixelinformationen, wie insbesondere unter Berücksichtigung von deren Helligkeit in den jeweiligen Abbildern und der im Visuell-Abbild und/oder im Infrarot-Abbild enthaltenen Farbinformation, erreicht. Dies muss nicht notwendigerweise Pixel für Pixel erfolgen, sondern kann auch durch Mittelwertbildung für orts- und zeitgleiche Pixelbereiche in beiden Abbildern geschehen.

Ferner kann es sinnvoll sein, die Pixelinformation im Infrarot-Abbild bei der Mittelwertbildung unterschiedlich zur zeit- und ortsgleichen Pixelinformation im Visuell-Abbild zu gewichten. Diese unterschiedliche Gewichtung kann bspw. tageslicht-und/oder witterungsabhängig und/oder in Abhängigkeit vom Scheinwerferlicht des Kraftfahrzeugs und/oder in Abhängigkeit von der Farbe im Visuell-Abbild erfolgen; hierdurch kann bspw. erreicht werden, dass eine rote Ampel im Fusionsbild besonders deutlich erkennbar ist.

Durch dieses Vorgehen können einzelne Bildbereiche besonders hervorgehoben werden. So kann beispielsweise der unmittelbare Fahrbereich des Fahrzeugs stärker betont werden, um eine gewisse Führung des Fahrers zu erreichen.

Bei zunehmender Dunkelheit könnte die Gewichtung der Infrarot-Information ggü. der visuellen Information bei der Mittelwertbildung zunehmen. Bei eingeschaltetem Abblendlicht könnte die Gewichtung der Infrarot-Information ggü. der visuellen Information im Vergleich zu eingeschaltetem Fernlicht erhöht werden.

Ebenso könnte der Informationsgehalt eines Bereichs in dem jeweiligen Abbild die Gewichtung mit bestimmen. Ist der Informationsgehalt in einem zeit- und ortsgleichen Bereich des Visuell-Abbilds bspw. deutlich höher als in demselben Bereich des Infrarot-Bereichs, so kann es sinnvoll sein, dies bei der Mittelwertbildung durch eine höhere Gewichtung der Visuell-Information zu berücksichtigen.

Wie bereits beschrieben, müssen die von den Kameras bzw. Sensoren generierten Abbilder vorverarbeitet werden, um entzerrt und objekttreu ausgerichtet zu sein. Um Speicher, der kostenintensiv ist, einzusparen, greift der Software-Algorithmus bevorzugt pixelweise auf die Sensorinformationen der Kameras 101 und 102 zu.

Bei den in Figur 1 dargestellten Vorrichtungen zur digitalen Bildverarbeitung, handelt es sich ganz oder teilweise bevorzugt um ein oder mehrere softwaregesteuerte Digital-Prozessoren, die vorzugsweise zur digitalen Bildverarbeitung in Echtzeit optimiert worden sind. Ebenso ist es aber auch denkbar, einen oder mehrere softwaregesteuerte PC-Prozessoren in kostengünstiger Weise zu verwenden, wenn deren Verarbeitungsgeschwindigkeit eine weitgehende Echtzeitverarbeitung der Abbilder zur Bereitstellung eines Fusions-Bildes mit Visuell- und Infrarot-Informationen gestattet.

Beispielhaft wird nun die folgende Fahrsituation betrachtet. Ein im Nahbereich von 10 bis 25 m auf einer Landstrasse vorausfahrendes Fahrzeug hat einen geringeren Abstand zu den Kameras eines erfindungsgemäß ausgestatteten Folgefahrzeugs als ein im Dunkeln liegender Bereich des rechten Seitenstreifens auf dem sich - visuell nicht sichtbar - weiter vorne Fußgänger befinden. Es wird angenommen, dass die für die Landstrassenfahrt (typischer Entfernungsbereich ca. 30 bis 150 m) an sich geeigneten Anpassungsparameter zur Vermeidung von Geister- bzw. Doppelbildern von dem Nachtsichtsystem 100 verwendet werden. Ohne weitere Beeinflussung der bereits beschriebenen Fusion des Visuell-Abbilds und des Infrarot-Abbilds entsteht durch das Nachtsichtsystem 100 ein Fusionsbild, dessen Zentrum bzw. Bildmitte das Visuell-Abbild des vorausfahrenden Fahrzeugs und ein davon räumlich zumindest teilweise getrenntes Infrarot-Abbild des vorausfahrenden Fahrzeugs zeigt, d.h. ein den Fahrer irritierendes Geister- bzw. Doppelbild des Visuell-Abbilds. Die im Bereich von ca. 30 bis 150 m befindlichen Objekte (z.B. die Fußgänger) werden demgegenüber weitgehend verzerrungs- bzw. geisterbildfrei auf dem Display dargestellt.

Der Abstand des vorausfahrenden Objekts bzw. Fahrzeugs wird bei einer ersten Ausführungsform der Erfindung von dem mit dem Nachtsichtsystem 100 ausgestatteten Folgefahrzeug gemessen, z.B. durch Radar, Lidar (Light Detection and Ranging) oder Ultraschall. Das Folgefahrzeug ist hierzu mit einer entsprechenden Sende- und Empfangseinrichtung versehen.

Nun wird von dem Nachtsichtsystem 100 mittels eines in diesem ablaufenden Vergleichs (nicht dargestellt) überprüft, ob der ermittelte Abstand in den Abstandsbereich der aktuell verwendeten Anpassungsparameter (bei diesem Beispiel für eine Landstrassenfahrt geeignet) fällt.

Falls ja, ist keine Verzerrung zu erwarten, d.h. die Fusion kann in der bereits beschriebenen Weise von dem Nachtsichtsystem 100 vorgenommen werden.

Falls nein, wird das Objekt von dem Nachtsichtsystem 100 bei einer ersten, bevorzugten Ausführungsform der Erfindung in Form seines Visuell-Abbilds oder seines Infrarot-Abbilds auf dem Display dargestellt (nicht dargestellt). Im Ergebnis entsteht dann im vorgenannten Fall auf dem Display insbesondere ein Fusionsbild, das im Zentrum bzw. in der Bildmitte das Visuell-Abbild oder das Infrarot-Abbild des vorausfahrendenden Fahrzeugs (nun ohne Doppelbild) und darum herum das Fusionsbild der im Bereich von 30 bis 150 m liegenden Objekte, wie z.B. die Fußgänger, geisterbildfrei zeigt.

Falls nein, wird das Objekt bzw. der betreffende Entfernungsbereich bei einer zweiten Ausführungsform der Erfindung durch ein Teil-Fusionsbild auf dem Display dargestellt, wobei das Teil-Fusionsbild durch eine Fusion aus Visuell-Abbild und Infrarot-Abbild des Objekts unter Verwendung erster Anpassungsparameter und das restliche Fusionsbild oder ein Teil hiervon unter Verwendung zweiter Anpassungsparameter durch das Nachsichtsystem 100 gebildet wird (nicht dargestellt). Der oder die ersten Anpassungsparameter sind im genannten Beispiel für den Abstand des vorausfahrenden Fahrzeugs (ca. 10 bis 25 m) und der oder die zweiten Anpassungsparameter sind für eine Landstrassenfahrt (ca. 30 bis 150 m) geeignet, d.h. im Ergebnis entsteht wiederum ein verzerrungsfreies Fusionsbild des vorausfahrenden Fahrzeugs und der Umgebung des Folgefahrzeugs auf dem Display (nicht dargestellt).

Es versteht sich, dass die Veränderung der verwendeten Anpassungsparameter von einem Teil-Fusionsbild zu einem anderen Teil-Fusionsbild des gesamten auf dem Display dargestellten Fusionsbilds nicht notwendigerweise abrupt erfolgen muss; vielmehr kann es zweckmäßig sein, die Veränderung fließend vorzunehmen, um ein weitgehend verzerrungsfreies Fusionsbild der Objekte aus unterschiedlichen Entfernungsbereichen (Umgebung des Folgefahrzeugs) zu erhalten.

Bei einer alternativen oder ergänzenden Ausführungsform der Erfindung sind an sich aus der digitalen Bildverarbeitung bekannte Maßnahmen vorgesehen, bei denen der oder die Anpassungsparameter bei der Fusion aus Visuell-Abbild und Infrarot-Abbild zur Bereitstellung eines verzerrungsfreien Abbilds der Umgebung des Fahrzeugs (mit Objekten in unterschiedlichen Entfernungsbereichen) auf dem Display oder dgl. in zur vorhergehenden Erläuterung analogen Weise variiert werden.

An der Verwendung der o.g. Sende- und Empfangseinrichtungen zur Ermittlung des Abstands zu einem oder mehreren Objekten, insbesondere eines vorausfahrenden Fahrzeugs, dürfte gegenüber der vorstehenden Ausführungsform von Vorteil sein, dass der Rechen- und damit der Hardware-Aufwand für die digitale Bildverarbeitung beim erfindungsgemäßen Verfahren bzw. bei der erfindungsgemäßen Vorrichtung in kostengünstiger Weise reduziert werden kann.

### Bevorzugte Merkmale der Anmeldung

1. Verfahren zur Sichtbarmachung der Umgebung eines Fahrzeugs, insbesondere bei Dunkelheit, gekennzeichnet durch
   - die Bereitstellung eines Visuell-Abbilds bzw. von dessen digitalen Daten der Umgebung, bevorzugt eines farbigen Visuell-Abbilds, wobei das visuelle Abbild die visuell sichtbaren Objekte zeigt, und
   - die Bereitstellung eines Infrarot-Abbilds bzw. von dessen digitalen Daten der Umgebung, wobei das Infrarot-Abbild die von den visuell sichtbaren und/oder weiteren Objekten ausgehende Infrarot-Strahlung zeigt.
2. Verfahren nach Anspruch 1, dadurch gekennzeichnet, dass das Visuell-Abbild bzw. dessen digitale Daten durch eine im visuellen Spektralbereich empfindliche Visuell-Kamera, bevorzugt eine farbempfindliche Visuell-Kamera, oder einen solchen ersten Sensor und das Infrarot-Abbild bzw. dessen digitale Daten durch eine im infraroten Spektralbereich empfindliche Infrarot-Kamera oder einen solchen zweiten Sensor bereitgestellt wird.
3. Verfahren nach Anspruch 2, dadurch gekennzeichnet, dass die Visuell-Kamera oder der erste Sensor bzw. deren Optik eine erste optische Achse und die Infrarot-Kamera oder der zweite optische Sensor bzw. deren Optik eine zweite optische Achse aufweist, die insbesondere parallel zueinander versetzt sind, so dass die Kameras bzw. Sensoren zumindest teilweise unterschiedliche Ausschnitte der Umgebung des Fahrzeugs, d.h. einen ersten und einen zweiten Ausschnitt, bereitstellen.
4. Verfahren nach Anspruch 3, dadurch gekennzeichnet, dass der bereitgestellte erste Ausschnitt und der bereitgestellte zweite Ausschnitt ganz oder teilweise durch eine Überlagerungs- bzw. Fusionseinrichtung (106) pixel-und/oder bereichsweise überlagert bzw. fusioniert werden, bei der Fusion mindestens ein entfernungsabhängiger, bevorzugt bei einer Kalibrierung für unterschiedliche Entfernungen gewonnener Anpassungsparameter, wie insbesondere mindestens ein Registrierungs- oder Transformationsparameter, berücksichtigt ist und der oder die Anpassungsparameter bevorzugt bei der Kalibrierung in einem Datenspeicher im Fahrzeug gespeichert werden.
5. Verfahren nach Anspruch 4, dadurch gekennzeichnet, dass der mindestens eine entfernungsabhängige Anpassungsparameter durch eine erste Kalibrierung für eine erste Entfernung oder einen ersten Entfernungsbereich und mindestens eine weitere Kalibrierung für mindestens eine weitere Entfernung oder einen weiteren Entfernungsbereich gewonnen wird.
6. Verfahren nach einem der Ansprüche 1 bis 5, gekennzeichnet durch eine Fusion bzw. Überlagerung von Visuell-Abbild und Infrarot-Abbild, bei der ein Fusionsbild entsteht, das mindestens einen ersten Bereich aufweist, der einen Teil des Visuell-Abbilds oder einen Teil des Infrarot-Abbilds zeigt, und mindestens einen zweiten Bereich aufweist, der durch die Fusion eines anderen Teils des Visuell-Abbilds und des entsprechenden Teils des Infrarot-Abbilds gebildet wird.
7. Verfahren nach einem der Ansprüche 1 bis 6, gekennzeichnet durch eine Fusion bzw. Überlagerung von Visuell-Abbild und Infrarot-Abbild, bei der ein Fusionsbild entsteht, das mindestens einen ersten Fusionsbild-Bereich und einen zweiten Fusionsbild-Bereich aufweist, wobei der erste Fusionsbild-Bereich unter Verwendung mindestens eines ersten entfernungsabhängigen Anpassungsparameters und der zweite Fusionsbild-Bereich unter Verwendung mindestens eines zweiten entfernungsabhängigen Anpassungsparameters gebildet wird.
8. Verfahren nach Anspruch 6, dadurch gekennzeichnet, dass der Abstand zwischen dem Fahrzeug und einem davor fahrenden Fahrzeug ermittelt und überprüft wird, ob der aktuell verwendete, entfernungsabhängige Anpassungsparameter für den ermittelten Abstand zur Bereitstellung eines geisterbildfreien Fusionsbilds geeignet ist, und, im Fall einer fehlenden Eignung, partiell im Fusionsbild lediglich der entsprechende Teil des Visuell-Abbilds oder des Infrarot-Abbilds dargestellt wird.
9. Verfahren nach Anspruch 7, dadurch gekennzeichnet, dass der Abstand zwischen dem Fahrzeug und einem davor fahrenden Fahrzeug ermittelt und überprüft wird, ob der aktuell verwendete, entfernungsabhängige Anpassungsparameter für den ermittelten Abstand zur Bereitstellung eines geisterbildfreien Fusionsbilds geeignet ist, und, im Fall einer fehlenden Eignung, mindestens ein weiterer geeigneter, entfernungsabhängiger Anpassungsparameter ermittelt und dieser zur Bereitstellung eines Teil-Fusionsbilds verwendet wird, das das vorausfahrende Fahrzeug zeigt.
10. Verfahren nach Anspruch 5, dadurch gekennzeichnet, dass die erste Entfernung bzw. der erste Entfernungsbereich einer für eine Stadtfahrt typischen Fahrsituation entspricht, wie insbesondere ein Entfernungsbereich von ca. 15 bis 75 m.
11. Verfahren nach Anspruch 5 oder 10, dadurch gekennzeichnet, dass eine zweite Entfernung bzw. ein zweiter Entfernungsbereich einer für eine Landstrassenfahrt typischen Fahrsituation entspricht, wie insbesondere ein Entfernungsbereich von ca. 30 bis 150 m.
12. Verfahren nach einem der Ansprüche 5, 10 oder 11, dadurch gekennzeichnet, dass eine dritte Entfernung bzw. ein dritter Entfernungsbereich einer für eine Autobahnfahrt typischen Fahrsituation entspricht, wie insbesondere ein Entfernungsbereich von ca. 50 bis 250 m.
13. Verfahren nach einem der Ansprüche 1 bis 12, dadurch gekennzeichnet, dass die aktuelle Fahrsituation des Fahrzeugs automatisch ermittelt wird und/oder der Fahrer einen ihm geeignet erscheinenden Anpassungsparameter aus einer Mehrzahl von Anpassungsparametern auswählt und der der aktuellen Fahrsituation entsprechende oder ausgewählte, durch Kalibrierung gewonnene und im Fahrzeug gespeicherte Anpassungsparameter bei der pixel- und/oder bereichsweisen Überlagerung bzw. Fusionierung des Visuell-Abbilds und des Infrarot-Abbilds von der digitalen Fusions-Bildverarbeitung berücksichtigt ist, wodurch bevorzugt ein weitgehend verzerrungsfreies und/oder geisterbildfreies Fusions-Abbild der Umgebung entsteht.
14. Verfahren nach Anspruch 13, dadurch gekennzeichnet, dass die aktuelle Position des Fahrzeugs automatisch von einem Fahrzeug-Navigationssystem, insbesondere ein Satelliten-Navigationssystem, und die der Position entsprechende Straßenkategorie bzw. Fahrsituation, wie insbesondere Stadtstrasse, Landstrasse oder Autobahn, ermittelt wird.
15. Verfahren nach Anspruch 13 oder 14, dadurch gekennzeichnet, dass die Fahrsituation automatisch anhand mindestens einer fahrdynamischen Größe, wie insbesondere die Fahrzeug-Geschwindigkeit und/oder der Betrieb des Abblend- bzw. Fernlichts und/oder die Fahrzeug-Beschleunigung, ermittelt wird.
16. Verfahren nach Anspruch 1, dadurch gekennzeichnet, dass die von den visuell sichtbaren Objekten und/oder den weiteren Objekten ausgehende und erfasste Infrarot-Strahlung eine Wellenlänge im Bereich von ca. 7 bis 14 mm, bevorzugt ca. 7,5 - 10,5 mm, aufweist.
17. Verfahren nach Anspruch 1, dadurch gekennzeichnet, dass die von den visuell sichtbaren Objekten und/oder den weiteren Objekten ausgehende und erfasste Infrarot-Strahlung eine Wellenlänge im Bereich von ca. 3 mm bis ca. 5 mm, aufweist.
18. Verfahren nach Anspruch 1, dadurch gekennzeichnet, dass die von den visuell sichtbaren Objekten und/oder den weiteren Objekten ausgehende und erfasste Infrarot-Strahlung eine Wellenlänge im Bereich von ca. 800 nm bis ca. 2,5 mm, aufweist.
19. Verfahren nach Anspruch 1, dadurch gekennzeichnet, dass das in Form von digitalen Daten vorliegende Visuell-Abbild der Umgebung des Fahrzeugs unter Verwendung einer Kalibriervorrichtung normalisiert wird.
20. Verfahren nach Anspruch 1, dadurch gekennzeichnet, dass das in Form von digitalen Daten vorliegende Infrarot-Abbild des Ausschnitts der Umgebung unter Verwendung der Kalibriervorrichtung normalisiert wird.
21. Verfahren nach einem der Ansprüche 15 oder 16, dadurch gekennzeichnet, dass von der Kalibriervorrichtung visuell sichtbare Strahlung und Infrarot-Strahlung ausgesandt wird.
22. Verfahren nach Anspruch 17, dadurch gekennzeichnet, dass die Kalibriervorrichtung mindestens eine Glühlampe aufweist, die im Fall von mehreren Glühlampen vorzugsweise schachbrettartig angeordnet sind.
23. Verfahren nach Anspruch 1, dadurch gekennzeichnet, dass das Visuell-Abbild oder das normalisierte Visuell-Abbild ggü. dem Infrarot-Abbild oder dem normalisierten Infrarot-Abbild oder umgekehrt durch die Verarbeitung von digitalen Daten der Abbilder ausgerichtet wird, so dass weitgehend zeitgleiche und ortsgleiche Bild-Paare beider Spektralbereiche bereitgestellt werden.
24. Verfahren nach Anspruch 1, dadurch gekennzeichnet, dass die digitalen Daten des Visuell-Abbilds und/oder des Infrarot-Abbilds in einem Bilddatenspeicher temporär gespeichert werden.
25. Verfahren nach Anspruch 1, dadurch gekennzeichnet, dass die Bildwiederholrate der Visuell-Kamera oder des ersten Sensors und der Infrarot-Kamera oder des zweiten Sensors zumindest weitgehend identisch sind.
26. Verfahren nach Anspruch 23, dadurch gekennzeichnet, dass ortsgleiche Pixel oder Pixelbereiche der weitgehend zeit- und ortsgleichen Abbilder der unterschiedlichen Spektralbereiche durch Verarbeitung von deren digitalen Daten einander überlagert werden bzw. dass eine Mittelwertbildung vorgenommen wird.
27. Verfahren nach Anspruch 26, dadurch gekennzeichnet, dass die Helligkeitswerte und/oder Farbwerte der Pixel oder Pixelbereiche überlagert bzw. für eine Mittelwertbildung herangezogen werden.
28. Verfahren nach einem der Ansprüche 23, dadurch gekennzeichnet, dass eine gewichtete Überlagerung bzw. Mittelwertbildung für ein oder mehrere weitgehend ortsgleiche Pixel aus dem Visuell-Abbild und dem Infrarot-Abbild vorgenommen wird.
29. Verfahren nach Anspruch 28, dadurch gekennzeichnet, dass die Gewichtung unter Berücksichtigung der Helligkeit und/oder der Sichtbedingungen in der Umgebung des Fahrzeugs erfolgt.
30. Verfahren nach Anspruch 19 oder 20, dadurch gekennzeichnet, dass Infrarot-Pixel und Visuell-Pixel oder solche Pixel-Bereiche unterschiedlich gewichtet werden.
31. Verfahren nach einem der Ansprüche 26 bis 30, dadurch gekennzeichnet, dass informationsreiche Gebiete ggü. informationsarmen Gebieten des Visuell-Abbilds und/oder des Infrarot-Abbilds bei der Überlagerung bzw. Mittelwertbildung höher gewichtet werden.
32. Vorrichtung (100) zur Sichtbarmachung der Umgebung eines Fahrzeugs, insbesondere während der Dunkelheit, dadurch gekennzeichnet, dass die Vorrichtung ein Verfahren nach einem der Ansprüche 1 bis 31 ausführt.
33. Vorrichtung nach Anspruch 32, gekennzeichnet durch eine Visuell-Kamera (101), bevorzugt eine farbempfindliche Visuell-Kamera, eine Infrarot-Kamera (102), eine erste Normalisierungsvorichtung (103) zur Normalisierung des von der Visuell-Kamera bereitgestellten, vorzugsweise farbigen visuellen Abbilds des Ausschnitts der Umgebung des Fahrzeugs, eine zweite Normalisierungsvorrichtung (104) zur Normalisierung des von der Infrarot-Kamera (102) bereitgestellten Infrarot-Abbilds des Ausschnitts der Umgebung des Fahrzeugs, eine Ausricht-Vorrichtung (105) zur Erzeugung von weitgehend zeit- und ortsgleichen Bildpaaren aus Visuell-Abbildern und Infrarot-Abbildern sowie eine Fusions- bzw. Überlagerungseinrichtung (106), die die weitgehend zeit- und ortsgleichen Bildpaare pixelweise oder bereichsweise überlagert und/oder Mittelwerte bildet.
34. Kalibriervorrichtung, dadurch gekennzeichnet, dass sie zur Kalibrierung einer Vorrichtung nach Anspruch 32 oder 33 dient und mindestens eine Strahlungsquelle aufweist, die sowohl visuell sichtbare Strahlung als auch Infrarot-Strahlung abgibt, wie insbesondere eine Glühlampe.

## Patentansprüche

1. Verfahren zur Sichtbarmachung der Umgebung eines Fahrzeugs, insbesondere bei Dunkelheit, **gekennzeichnet durch**
- die Bereitstellung eines Visuell-Abbilds bzw. von dessen digitalen Daten der Umgebung, bevorzugt eines farbigen Visuell-Abbilds, wobei das visuelle Abbild die visuell sichtbaren Objekte zeigt, und
- die Bereitstellung eines Infrarot-Abbilds bzw. von dessen digitalen Daten der Umgebung, wobei das Infrarot-Abbild die von den visuell sichtbaren und/oder weiteren Objekten ausgehende Infrarot-Strahlung zeigt,
**gekennzeichnet durch**
- eine Fusion bzw. Überlagerung von Visuell-Abbild und Infrarot-Abbild, bei der ein Fusionsbild entsteht, das mindestens einen ersten Fusionsbild-Bereich und einen zweiten Fusionsbild-Bereich aufweist, wobei der erste Fusionsbild-Bereich unter Verwendung mindestens eines ersten entfernungsabhängigen Anpassungsparameters und der zweite Fusionsbild-Bereich unter Verwendung mindestens eines zweiten entfernungsabhängigen Anpassungsparameters gebildet wird.

2. Verfahren nach Anspruch 1, **dadurch gekennzeichnet, dass** der Abstand zwischen dem Fahrzeug und einem davor fahrenden Fahrzeug ermittelt und überprüft wird, ob der aktuell verwendete, entfernungsabhängige Anpassungsparameter für den ermittelten Abstand zur Bereitstellung eines geisterbildfreien Fusionsbilds geeignet ist, und, im Fall einer fehlenden Eignung, partiell im Fusionsbild lediglich der entsprechende Teil des Visuell-Abbilds oder des Infrarot-Abbilds dargestellt wird.

3. Verfahren nach Anspruch 1, **dadurch gekennzeichnet, dass** der Abstand zwischen dem Fahrzeug und einem davor fahrenden Fahrzeug ermittelt und überprüft wird, ob der aktuell verwendete, entfernungsabhängige Anpassungsparameter für den ermittelten Abstand zur Bereitstellung eines geisterbildfreien Fusionsbilds geeignet ist, und, im Fall einer fehlenden Eignung, mindestens ein weiterer geeigneter, entfernungsabhängiger Anpassungsparameter ermittelt und dieser zur Bereitstellung eines Teil-Fusionsbilds verwendet wird, das das vorausfahrende Fahrzeug zeigt.

4. Verfahren nach einem der vorstehenden Ansprüche, **dadurch gekennzeichnet, dass** die aktuelle Fahrsituation des Fahrzeugs automatisch ermittelt wird und/oder der Fahrer einen ihm geeignet erscheinenden Anpassungsparameter aus einer Mehrzahl von Anpassungsparametern auswählt und der der aktuellen Fahrsituation entsprechende oder ausgewählte, durch Kalibrierung gewonnene und im Fahrzeug gespeicherte Anpassungsparameter bei der pixel- und/oder bereichsweisen Überlagerung bzw. Fusionierung des Visuell-Abbilds und des Infrarot-Abbilds von der digitalen Fusions-Bildverarbeitung berücksichtigt ist, wodurch bevorzugt ein weitgehend verzerrungsfreies und/oder geisterbildfreies Fusions-Abbild der Umgebung entsteht.

5. Verfahren nach Anspruch 4, **dadurch gekennzeichnet, dass** die aktuelle Position des Fahrzeugs automatisch von einem Fahrzeug-Navigationssystem, insbesondere ein Satelliten-Navigationssystem, und die der Position entsprechende Straßenkategorie bzw. Fahrsituation, wie insbesondere Stadtstrasse, Landstrasse oder Autobahn, ermittelt wird.

6. Verfahren nach Anspruch 4 oder 5, **dadurch gekennzeichnet, dass** die Fahrsituation automatisch anhand mindestens einer fahrdynamischen Größe, wie insbesondere die Fahrzeug-Geschwindigkeit und/oder der Betrieb des Abblend- bzw. Fernlichts und/oder die Fahrzeug-Beschleunigung, ermittelt wird.

7. Verfahren nach Anspruch 1, **dadurch gekennzeichnet, dass** das in Form von digitalen Daten vorliegende Visuell-Abbild der Umgebung des Fahrzeugs unter Verwendung einer Kalibriervorrichtung normalisiert wird.

8. Verfahren nach Anspruch 1, **dadurch gekennzeichnet, dass** das in Form von digitalen Daten vorliegende Infrarot-Abbild des Ausschnitts der Umgebung unter Verwendung der Kalibriervorrichtung normalisiert wird.

9. Verfahren nach einem der Ansprüche 7 oder 8, **dadurch gekennzeichnet, dass** von der Kalibriervorrichtung visuell sichtbare Strahlung und Infrarot-Strahlung ausgesandt wird.

10. Verfahren nach einem der Ansprüche 7 bis 9, **dadurch gekennzeichnet, dass** die Kalibriervorrichtung mindestens eine Glühlampe aufweist, die im Fall von mehreren Glühlampen vorzugsweise schachbrettartig angeordnet sind.

11. Vorrichtung (100) zur Sichtbarmachung der Umgebung eines Fahrzeugs, insbesondere während der Dunkelheit, **dadurch gekennzeichnet, dass** die Vorrichtung ein Verfahren nach einem der Ansprüche 1 bis 10 ausführt.

12. Vorrichtung nach Anspruch 11, **gekennzeichnet durch** eine Visuell-Kamera (101), bevorzugt eine farbempfindliche Visuell-Kamera, eine Infrarot-Kamera (102), eine erste Normalisierungsvorichtung (103) zur Normalisierung des von der Visuell-Kamera bereitgestellten, vorzugsweise farbigen visuellen Abbilds des Ausschnitts der Umgebung des Fahrzeugs, eine zweite Normalisierungsvorrichtung (104) zur Normalisierung des von der Infrarot-Kamera (102) bereitgestellten Infrarot-Abbilds des Ausschnitts der Umgebung des Fahrzeugs, eine Ausricht-Vorrichtung (105) zur Erzeugung von weitgehend zeit- und ortsgleichen Bildpaaren aus Visuell-Abbildern und Infrarot-Abbildern sowie eine Fusions- bzw. Überlagerungseinrichtung (106), die die weitgehend zeit- und ortsgleichen Bildpaare pixelweise oder bereichsweise überlagert und/oder Mittelwerte bildet.

13. Kalibriervorrichtung, **dadurch gekennzeichnet, dass** sie zur Kalibrierung einer Vorrichtung nach Anspruch 11 oder 12 dient und mindestens eine Strahlungsquelle aufweist, die sowohl visuell sichtbare Strahlung als auch Infrarot-Strahlung abgibt, wie insbesondere eine Glühlampe.
